Europäisches Patentamt

**European Patent Office**

**Office européen des brevets**

(11) Publication number: **0 018 815**
**A1**

## (12) EUROPEAN PATENT APPLICATION

(21) Application number: **80301404.2**

(22) Date of filing: **29.04.80**

(51) Int. Cl.³: **A 01 G 25/02**

(30) Priority: **04.05.79 GB 7915630**

(43) Date of publication of application:
**12.11.80 Bulletin 80/23**

(84) Designated Contracting States:
**BE CH DE FR GB IT LI LU NL**

(71) Applicant: **CAMERON IRRIGATION COMPANY LIMITED**
**Harwood Industrial Estate**
**Littlehampton West Sussex BN17 7BA(GB)**

(72) Inventor: **Dawn, Alan William**
**95 Maplehurst Road**
**Chichester West Sussex(GB)**

(74) Representative: **Allden, Thomas Stanley et al,**
**A.A. THORNTON & CO. Northumberland House 303-306**
**High Holborn**
**London WC1V 7LE(GB)**

(54) Drip irrigation emitter.

(57) An emitter 1 comprises a housing 2 and a key (or 3A) fitted into the housing. The key 3 has a spigot 12 whose periphery is defined by a screw thread form 16 into a helical channel 17. The housing 2 has one end 5 open and the other end 6 closed. Barbed nipples 9 and 11 are provided spaced apart along the housing 2 to pass water to and from the interior of the housing. The helical channel 17 controls the flow rate of water from the housing. At one end, the helical channel 17 communicates with an axial passage 14 or a radial hole 14A which will register with the nipple 9 only when the key 3 is turned to a particular orientation in the housing 2 at which time it is locked from withdrawal from the housing. At the other end, the helical channel 17 registers at all times with the nipple 11 or has a chordal passage 15 which only registers with the nipple 11 when the key 3 is turned to the aforesaid orientation.

FIG. 1.

0018815

# TITLE MODIFIED
see front page

## - 1 -
### Drip Irrigation

This invention concerns drip irrigation, and has particular reference to emitters through which water is discharged at spaced outlet points along an irrigation line.

Drip irrigation is a method which makes small measured amounts of water available to the root areas of trees, vines or plants in optimum quantities. Released drop by drop from properly spaced emitters, the water enters the soil with ease and moves by capillarity beneath the surface to wet the root zone area.

According to the invention there is provided an emitter comprising a housing having one end closed and the other end open, a flow control spigot received in the housing from the open end thereof, a pair of inlet and outlet nipples spaced apart along the length of the housing and each with a passage communicating with the interior of the housing, and means for ensuring that the spigot when entered into the housing can be turned to a defined angular orientation relative to the housing at which position a flow control passage defined in the spigot will be in communication with the passages in the inlet and outlet nipples.

In order that the invention may be well understood there will now be described two embodiments thereof, given by way of example, reference being had to

BAD ORIGINAL

the accompanying drawings, in which:

Figure 1 is a sectioned axial elevation of an emitter comprising a housing and a key;

Figure 2 is an end view taken in the direction of arrow A of Figure 1;

Figure 3 is a similar, fragmentary end view but with the key removed from the housing;

Figure 4 is a cross-section of the key taken along the line V-; of Figure 1;

Figure 5 is a cross-section also taken along the line V-V of Figure 1, showing the key in the "drip" position;

Figure 6 is a plan view of the key;

Figure 7 is a cross-section of the key taken along the line VII-VII of Figure 1;

Figure 8 is a plan view of an alternative key; and

Figure 9 is a sectioned axial elevation of the key of Figure 8.

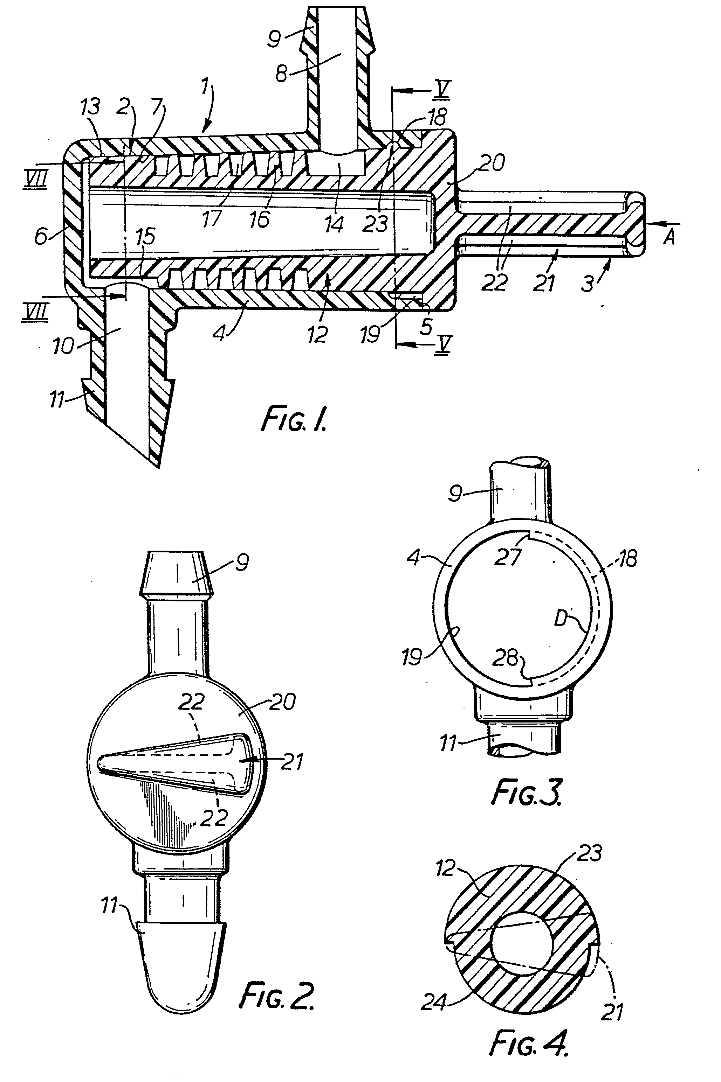

As seen in Figure 1, an emitter 1 comprises a housing 2 and a key 3 fitted into the housing. The configuration of the key 3 determines the flow rate of the emitter 1. The housing 2 will accept a plurality of different keys 3 each shaped similarly apart from the region thereof which governs the flow rate. Two such keys will hereafter be described, one giving a flow rate of 8 litres/hour from a supply pressure of 15 p.s.i., and the second a flow rate of 2 litres/hour with a supply pressure of 2 p.s.i. Keys giving other flow rates can also be used. The emitter 1 depicted in Figure 1 incorporates the 8 litres/hour key 1.

The housing 2 has a generally cylindrical body 4 with one end 5 open and the other end 6 closed. The inner peripheral surface 7 of the body 4 is slightly tapered, as by $1^{\circ}$, towards the closed end 6. A radial

- 3 -

passage 8 is provided to the interior of the body 4
through a barbed nipple 9. Another radial passage 10
is provided to the interior of the body 4 through a
second barbed nipple 11. Both barbed nipples are
integral with the body 4 with the nipple 9 positioned
adjacent its open end 5 and the nipple 11 adjacent its
closed end 6. The nipples 9, 11 are, therefore, axially
spaced apart along the body 4, but are diametrically
opposite one another viewed in end elevation, as shown
in Figure 2. Either the passage 8 or the passage 10
can constitute an inlet passage through which water can
flow into the interior of the body 4, in which event
the other passage serves as an outlet passage through
which the admitted water can discharge from the body.

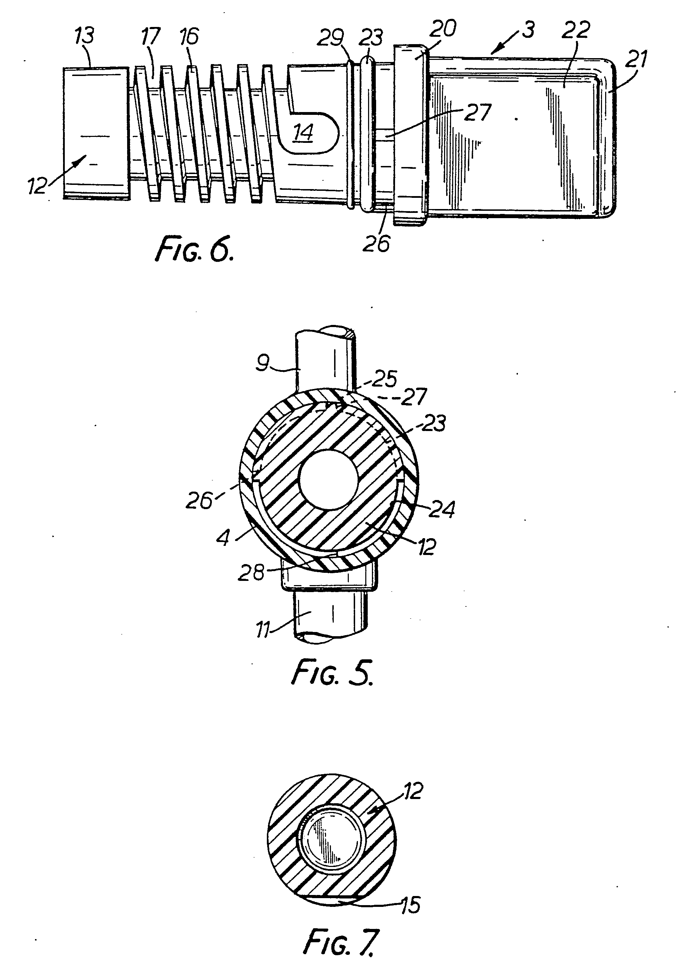

The key 3 has a spigot 12 whose outer
peripheral surface 13 is tapered to match that of the
body surface 7 to make a snug fit therewith when the
key is inserted into the open end 5 of the body 4 so
that the spigot is positioned therein. The spigot 12
has an axial passage 14 formed in its surface 13 which
will register, by means to be described, with the
housing passage 8. The innermost end of the spigot 12
has a chordal passage 15 shown also in Figure 7, which,
when the spigot passage 14 is aligned with the housing
passage 8, is registered with the housing passage 10.
Between the spigot passages 14, 15, the spigot surface
13 is defined by a screw thread form 16 into a helical
channel 17, one end of which communicates with the
spigot passage 14 and the other end of which communicates with the spigot passage 15.

Assuming, then, that the barbed nipple 9
is connected to a water supply, water will flow through
its radial passage 8 into the axial passage 14 in the
spigot 12 and along the helical channel 17 to exit from
the emitter 1 through the registering spigot chordal

- 4 -

passage 15 and the passage 10 in the second barbed nipple 11.

It is the length and cross-section of the helical channel 17 which are critical to the emission rate, and by varying the screw thread form 16 different cross-sections of the helical channel can be obtained. The length of the helical channel 17 can be varied by varying the length of the axial passage 14 and/or chordal passage 15 so as to shorten or lengthen the screw thread form 16.

The means for ensuring registry of the spigot axial passage 14 with the housing radial passage 8 will now be described together with means by which the key 3 is detachably locked to the housing 2.

Between the barbed nipple 9 and the open end 5 of the body 4, the interior peripheral surface 7 of the body is formed with an annular groove 18 extending slightly less than 180° and lying vertically, to the right hand side of the body as viewed in Figure 3. From the groove 18 to the open end 5, the surface 7 is formed with a recess 19 which extends slightly more than 180°, whose outer diameter matches that of the groove 18, and which lies vertically to the left hand side of the body.

At its larger diameter end of the spigot 12, the key has a flange 20 which abuts against the open end 5 of the housing 2, and a knob 21 extends outwardly of the flange. The knob 21 is of Tee cross-section with two reinforcing webs 22.

Between the flange 20 and the spigot passage 14, the spigot periphery 13 has on it an annular bead 23 which extends through 180°, as shown in Figure 4, and which is matched to the annular groove 18 in the body 4. From the bead 23 to the flange 20, the spigot periphery 13 has a semi-circular region 24 whose diameter matches that of the inner diameter D of the annular groove 18.

The key 3 is entered, spigot first, into the housing 2 with its semi-circular bead 23 aligned with the "semi-circular" recess 19 in the body 4 and with its semi-circular region 24 aligned with the inner diameter D of the annular groove 18, and is pushed home until the flange 20 abuts the housing end 5 at which time the bead registers with the annular groove 18. The key 3 can then be turned clockwise, as viewed in Figure 3, to enter the bead 23 into the groove 18. Turning of the key 3 is restricted to 90°, and the engagement of the bead and groove 23, 18 over one quadrant, as shown in Figure 5, is sufficient to hold the key to the housing. When the key 3 is turned clockwise to its "lock" position, the spigot passage 14 is brought automatically into vertical register with the nipple passage 8 and the spigot passage 15 with the nipple passage 10. To remove the key 3, the knob 21 is gripped and turned anti-clockwise through $\sim 0°$ until the bead 23 again aligns with the body groove 19 when the key can be withdrawn from the body.

Referring to Figure 5, the key 3 is prevented from being rotated into an incorrect position by two axial bars 25, 26 which are spaced 90° apart on the spigot surface 13, which extend from the bead 23 to the flange 20 and whose outer diameter matches that of the bead. When the key is turned clockwise through 90°, as described, the bar 25 will abut one end 27 of the annular groove 18 to prevent further clockwise rotation. When the key is turned back from its "locked" position through 90°, the bar 26 will abut the other end 28 of the groove 18 so ensuring that the key is correctly aligned for withdrawal.

To inhibit leakage between the key 3 and the

- 6 -

housing 2 through the open end 5 of the body 4, the peripheral surface 13 is provided with a small sealing annular rib 29, shown in Figure 6, between its bead 23 and its axial passage 14. The rib is fashioned to deform into sealing engagement with the internal peripheral surface 7 of the body 4.

In the illustrated spigot 12, the helical channel 17 is of generally U axial section. The other spigot which is designed to emit 2 litres/hour has a helical channel of generally V axial section. The design of the screw thread form and length to give the required emission rate is within the compass of a person skilled in the art and needs no further disclosure here.

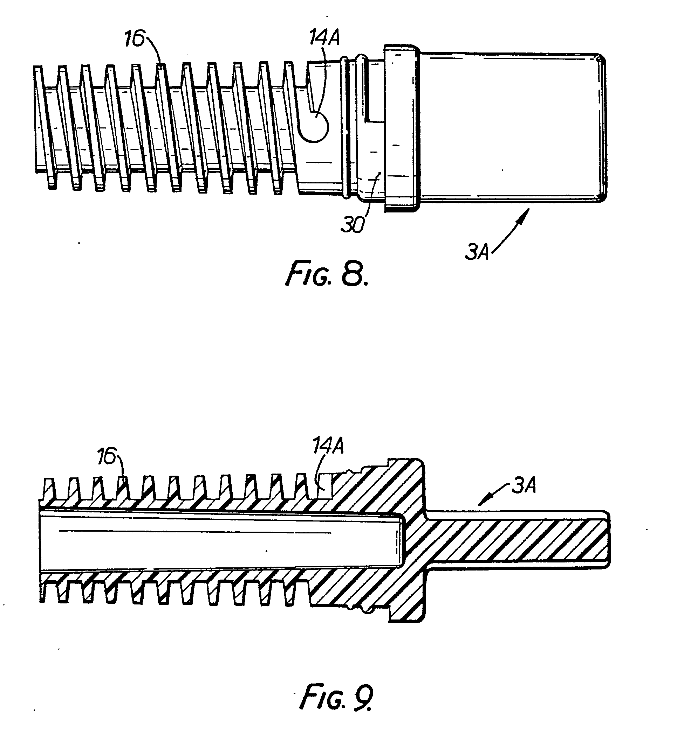

The key 3A depicted in Figures 8 and 9 differs from that so far described in two respects. First, the axial passage 14 is replaced by a radial hole 14A. Second, the chordal passage 15 is dispensed with and the screwthread form 16 continues to the innermost end of the spigot. Thereby, without changing the overall length of the emitter, the length of the helical channel is increased. This is particularly important in the case of the 2 litres/hour design since it is found that otherwise the size of the cross-section of the helical channel is so small that it is prone to blockage. The water enters and exits as before, but the helical channel at the innermost end of the spigot continually registers with the nipple 11. The configuration of the key 3A lends itself to a moulding tool that is easier to manufacture.

The emitter is manufactured from two distinct plastics materials, with the key and the housing each being a one-piece moulding. The key is a harder grade of plastic than the housing thereby allowing for the fit to be exact without the necessity of tight manufacturing tolerances. Since the screw thread form is moulded in the key spigot rather than the housing, production of the housing is facilitated and standardised. It is important that the screw thread form fits closely the bore in the housing body to prevent water from bypassing the helical flow channel and result in inaccurate emission rates, and this is ensured by tapering the bore and the spigot, as described.

The plastic material used for the housing may be a co-polymer grade of polypropylene, and the key may be a 28% talc filled co-polymer grade of polypropylene. Other plastics materials may, of course, be utilized.

The housing is coloured black to prevent ultra-violet problems.

The emitter can be used in a number of positions. It can be directly fitted into a polyethylene water pipe using the barbed nipple 11 and with the water emitting directly on to the plant via the barbed nipple 9. Again, the emitter can be used in the same way but with a polyethylene tube fitted to the barbed nipple 9, the tube then being directed to a plant or diverted into two or more junctions on to a number of plants. Alternatively, the emitter can have the barbed nipple 9 connected into the end of a system sold by us under the trade name Wanda Lead in which case the water would drip from the barbed nipple 11.

The construction of the emitter, and particularly its barbed nipples, enables the emitter to fit close and parallel to the main water pipe thereby minimising the risk of accidental removal therefrom.

The emitter design also lends itself to being "miniaturised" in that the overall length of the housing is but 20.50mm and its maximum diameter is 8.00mm.

The key 3 or 3A can be turned to a position in which its water collection chamber (the axial passage 4 or the radial hole 14A, respectively) is only in partial registry or out of registry with the nipple passage 8, at which time there will only be a partial emission or substantially zero emission, respectively, from the emitter...in addition to the full emission condition obtaining when the water collection chamber makes complete registry with the nipple passage 8. The emitter thus has the capability of giving zero, partial or full emission by selective turning of the key.

The provision of the water collection chamber is advantageous where a coarse screw thread form is utilized in conjunction with a small diameter nipple passage 8...when serving as the outlet. It is possible, without such a water collection chamber, i.e. if water was allowed to flow direct from the helical flow channel to the nipple outlet passage, that the width of the screw thread crest could obstruct the passage even to the point of blocking it completely. By providing a "large" water collection chamber, that undesirable situation is avoided when the spigot is turned to the full emission condition.

In the key 3A, a single stop 30 extends the circumferential extent between the axial bars 25, 26 of the key 3 and its angularly spaced opposite ends serve the same purpose as those axial bars.

Claims:

1.        An emitter comprising a housing having one
end closed and the other end open, a flow control spigot
received in the housing from the open end thereof, a
pair of inlet and outlet nipples spaced apart along the
length of the housing and each wit'. a passage communica-
ting with the interior of the housing, and means for
ensuring that the spigot when entered into the housing
can be turned to a defined angular orientation relative
to the housing at which position a flow control passage
defined in the spigot will be in communication with the
passages in the inlet and outlet nipples.

2.        An emitter as claimed in claim 1, wherein the
flow control passage includes a helical channel defined
by a screw thread form in the peripheral surface of the
spigot.

3.        An emitter as claimed in claim 2, wherein the
spigot is tapered from one end to the other to match
the interior peripheral surface of the housing against
which the spigot snugly fits.

4.        An emitter as claimed in claim 2 or claim 3,
wherein the spigot has a radial hole in its periphery
communicating with one end of the helical channel and
which registers with a first one of the passages when
the spigot is turned to the defined angular orientation.

5.        An emitter as claimed in claim 4, wherein the
opposite end of the helical channel registers with the
second one of the passages at all times.

6.        An emitter as claimed in claim 2 or claim 3, wherein the spigot has an axial passage in its periphery communicating with one end of the helical channel and which registers with a first one of the passages when the spigot is turned to the defined angular orientation.

7. An emitter as claimed in claim 6, wherein the spigot ha., a chordal passage in its periphery communicating with the other end of the helical channel and which registers with th.` second one of the passages when the spigot is turned to the defined angular orientation.

8. An emitter as claimed in any of the preceding claims, wherein the spigot and the housing aro formed so that the spigot can only be entered into the open end of the housing when in one particular orientation and so that when the spigot is turned to the defined angular orientation it cannot be withdrawn from the housing.

9. An emitter as claimed in claim 8, wherein the spigot has an annular bead extending partially around its periphery, and the housing has means at its open end so as to receive the annular bead only when axially registered therewith and is also provided with an annular groove extending partially around its interior periphery and into which, when the spigot is fully entered into the housing, the annular bead of the spigot will be received when the spigot is turned to the defined angular orientation by which the spigot is prevented from being withdrawn from the housing.

10. An emitter as claimed in claim 9, wherein the spigot has a pair of angularly spaced stops on its periphery arranged respectively to abut opposite ends of the annular groove, one of the stops when abutting the respective end of the annular groove preventing turning of the spigot past the defined angular orientation, and the other of the stops, when the spigot is turned back, abutting the opposite end of the annular groove to ensure the spigot is aligned for withdrawal from the housing.

11.      An emitter as claimed in any of the preceding claims, wherein the spigot has a flange arranged to abut the end wall of the housing at the open end thereof when fully entered into the housing.

12.      An emitter as claimed in claim 11, wherein the spigot has a knob extending axially outwardly of the flange by which to enable the spigot to be turned.

13.      An emitter as claimed in claim 12, wherein the housing with its inlet and outlet nipples is a one-piece moulding of a plastics material, and the spigot with its flange and knob is also a one-piece moulding of a harder plastics material.

FIG. 1.

FIG. 2.

FIG. 3.

FIG. 4.

Fig. 6.

Fig. 5.

Fig. 7.

16   14A

30

3A

FIG. 8.

16   14A   3A

FIG. 9.

0018815

European Patent Office

**EUROPEAN SEARCH REPORT**

Application number

EP 80 30 1404

| DOCUMENTS CONSIDERED TO BE RELEVANT | | | CLASSIFICATION OF THE APPLICATION (Int Cl. ³) |
|---|---|---|---|
| Category | Citation of document with indication, where appropriate, of relevant passages | Relevant to claim | |
| | GB - A - 1 511 403 (IPLEX PLASTIC INDUSTRIES) <br> * The whole document * | 1,2,3 8,9, 12 | A 01 G 25/02 |
| | US - A - 3 885 743 (WAKE) <br> * Column 3, line 32 - column 5, line 63; figures 1-8 * | 1,2,9, 11-13 | |
| | US - A - 3 998 244 (BENTLEY) <br> * Column 3, line 36 - column 6, line 19; figures 1, 1A, 2 * | 1,2, 12 | **TECHNICAL FIELDS SEARCHED (Int.Cl. ³)** <br><br> A 01 G 25/02 |
| XP | US - A - 4 177 947 (MENZEL) <br> * The whole document * | 1,2,3 4,8,9 11,12 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-07-1980 | HERYGERS |

EPO Form 1503.1  06.78